# EUROPÄISCHE PATENTANMELDUNG

(11) **EP 4 786 090 A1**
(43) Veröffentlichungstag der Anmeldung: **05.08.2026**
(21) Anmeldenummer: 26153487.9
(22) Anmeldetag: 22.01.2026
(51) Int. Cl.: B23P 21/00, B25J 5/02, B62D 65/02, B23K 37/04, B62D 29/00

(54) **AUTOMATISIERTES FERTIGUNGSSYSTEM ZUR HERSTELLUNG EINER DIFFERENTIALEN GEHÄUSESTRUKTUR**

(30) Priorität: 31.01.2025 DE 102025103680; 25.03.2025 DE 102025111568
(71) Anmelder: Siemens Mobility GmbH, 80997 München (DE)
(72) Erfinder: Gobbers, Dirk, 47829 Krefeld (DE); Kuhn, Daniel, 47829 Krefeld (DE)
(74) Vertreter: Siemens Patent Attorneys

(57) **Zusammenfassung**

Die Erfindung betrifft das erfindungsgemäße automatisierte Fertigungssystem (1). Das erfindungsgemäße automatisierte Fertigungssystem (1) weist eine Auflage (2) für das horizontale Positionieren einer zu bearbeitenden differentialen Gehäusekomponente (3) auf. Teil des erfindungsgemäßen automatisierten Fertigungssystems (1) ist mindestens ein Bearbeitungsroboter (4) oder Handhabungsroboter (5) zur Bearbeitung oder zum Halten der zu bearbeitenden differentialen Gehäusekomponente (3), welche an der Peripherie der zu bearbeitenden differentialen Gehäusekomponente (3) angeordnet ist. Das erfindungsgemäße automatisierte Fertigungssystem (1) umfasst auch eine in Längsrichtung der zu bearbeitenden differentialen Gehäusekomponente (3) angeordnete mobile Bewegungseinrichtung (4a, 5a), welche dazu eingerichtet ist, entweder die bearbeitenden differentialen Gehäusekomponente (3) relativ zu dem mindestens einen Bearbeitungs- oder Handhabungsroboter (4, 5) in Längsrichtung zu bewegen oder den mindestens einen Bearbeitungsroboter (4) oder Handhabungsroboter (5) in Längsrichtung relativ zu der zu bearbeitenden differentialen Gehäusekomponente (3) zu bewegen. Es wird auch ein Verfahren zur Herstellung einer differentialen Gehäusestruktur (3c) beschrieben. Überdies wird ein Verfahren zur Herstellung eines automatisierten Fertigungssystems (1) beschrieben.

## Beschreibung

Die Erfindung betrifft ein automatisiertes Fertigungssystem. Darüber hinaus betrifft die Erfindung ein Verfahren zur Herstellung einer differentialen Gehäusestruktur. Die Erfindung bezieht sich auch auf ein Verfahren zur Herstellung eines automatisierten Fertigungssystems.

Transportmittel benötigen tragende Strukturen und Gehäuse, um Personen oder Gegenstände sicher an ihr Ziel zu transportieren. Bei Schienenfahrzeugen umfassen Wagons, Triebfahrzeuge oder Zugfahrzeuge üblicherweise einen sogenannten Wagenkasten, der heutzutage in selbsttragender Bauweise ausgeführt ist.

Unter selbsttragender Bauweise versteht man die Verwendung eines Wagenkastens, der keinen besonderen Rahmen bzw. Untergestell besitzt. Der Wagenkasten selbst nimmt sämtliche Zug- und Stoßkräfte auf. Er ist dabei in der Regel wie eine Vierkant-Röhre aufgebaut: seitlich werden Öffnungen in Form von Türen und Fensterbändern eingebracht, unten befinden sich Flansche zur Aufnahme des Fahrgestells, vorne und hinten Aufnahmen für Wagenpuffer und Wagenkupplung. Heute sind selbsttragende Wagenkästen die Regel, dabei werden unterschiedliche Bauweisen verwendet:
Eine in den meisten Fällen leichte Bauweise, insbesondere von Aluminiumrohbauten, kann durch eine Differentialbauweise realisiert werden, welche bei Stahlrohbauten Standard ist und auch in den ersten Generationen von Aluminium-Rohbauten standardmäßig eingesetzt wurde, bis sie in den meisten Schienenfahrzeugen durch die Integralbauweise ersetzt wurde. In Fahrzeugen mit besonders hohen Anforderungen an den Leichtbau kann die Differentialbauweise auch heute eine bevorzugte Alternative sein, wobei üblicherweise einschalige Strukturen mit angefügten Verstärkungen versehen werden. Dabei werden Spanten und / oder Stringer in festgelegten Rastern auf die einschalige Struktur aufgebracht, um die Struktur auszusteifen.

Bei der Differential- oder Rohkastenbauweise wird zunächst ein tragendes Stahl- oder Aluminiumskelett aus horizontal verlaufenden Stringern und vertikal verlaufenden Spanten erstellt, auf das anschließend Bleche zur Beplankung aufgebracht werden. Alternativ wird erst eine einschalige, oder teilweise einschalige Außenhaut hergestellt und in einer geeigneten Vorrichtung mit Stringern und Spanten verstärkt und ausgesteift. Die Differentialbauweise ist das einfachste und kostengünstigste Verfahren zur Erstellung eines Wagenkastens. Dies hat folgende Gründe: Es können auf Elementebene standardisierte Metall-Halbzeuge (z. B. Bleche) verwendet werden. Die Werkzeugkosten für die Fertigung sind gering, unter anderem weil einfache Fertigungstechnologien verwendet werden können. Instandsetzungen sind relativ einfach möglich. So können die nach einem Unfall verbeulten Außenbleche ausgetauscht werden. Die dazu notwendigen Schrauben sind entweder durch Leisten verdeckt oder außerhalb des eigentlichen Sichtbereichs angeordnet. Nachteilig wirkt sich die hohe Anzahl von Einzelteilen auf den Fertigungsaufwand aus. Aufgrund des Wärmeeintrags beim Schweißen können Bauteile einen Verzug aufweisen und müssen daher im Anschluss nachgearbeitet werden (Richten, Spannungsarmglühen, Schleifen, Spachteln).

Heute wird die Differentialbauweise bei Vollbahnen nur mehr für Lokomotiven, Stahlwagenkästen, Kleinserien und besondere Konstruktionen verwendet; bei Straßenbahnen hingegen ist sie noch immer weit verbreitet, um nach Unfällen eine einfachere und kostengünstige Reparatur gewährleisten zu können. Ferner erlaubt die Differentialbauweise dünnwandigere Wagenkästen als die Integralbauweise, was insbesondere bei Fahrzeugen mit schmalem Fahrbereich von Bedeutung ist.

Werden Versteifungselemente unter anderem auf die Innenseite der Außenhaut gefügt, so kommen teilweise verzugsarme Schweißverfahren zum Einsatz, mit denen Reibrührschweißpunkte erzeugt werden, oder es kommen Klebeverbindungen zum Einsatz, um stärkere Schweißverzüge zu verhindern und eine weitestgehend ebene Außenhaut zu gewährleisten.

Es gibt auch Varianten mit Versteifungselementen, die sich aufgrund ihrer Anordnung kreuzen. So sind beispielsweise zur Aussteifung Stringer an die Aluminiumstruktur angepresst. Quer dazu werden differentiale Versteifungsbauteile, zum Beispiel Spanten, angefügt. In den Kreuzungspunkten müssen entweder die Stringer unterbrochen werden oder die quer dazu angeordneten Spanten, was zu einer lokalen Schwächung der Struktur führt. Alternativ werden die Stringer und Spanten mit unterschiedlichen Höhen ausgeführt. Dadurch wird es ermöglicht, die jeweils höhere Versteifung im Kreuzungspunkt auszunehmen, wodurch die niedrigere Versteifung unterbrechungsfrei durchlaufen kann.

Eine bei Aluminiumrohbauten in Profilbauweise mögliche Ausprägung ist eine Teildifferentialbauweise, bei welcher die längslaufenden Strukturen aus einschaligen, oder überwiegend einschaligen Strangpressprofilen gefügt werden, was die Möglichkeit ergibt, an diese Strangpressprofile bereits Versteifungen, wie Stringer, mit anzupressen, wodurch diese nicht durch zusätzliche Fügeoperationen angebunden werden müssen.

Bei der Teildifferentialbauweise von Gehäusestrukturen von Wagenkästen bestehen die Baugruppen im Vergleich zur heute üblichen Integralbauweise aus einer deutlich höheren Anzahl von Einzelheiten. Damit verbunden ist eine entsprechend hohe Anzahl von Handlings und Fügeoperationen, die bei einer manuellen oder teilautomatisierten Fertigung zu erhöhtem Aufwand und erhöhten Fertigungskosten gegenüber der Integralbauweise führen können.

Es besteht also die Aufgabe, den Ressourcenaufwand für die Herstellung von Gehäusestrukturen in Differentialbauweise oder Teildifferentialbauweise im Vergleich zur bisherigen Vorgehensweise zu reduzieren.

Diese Aufgabe wird durch ein automatisiertes Fertigungssystem gemäß Patentanspruch 1, ein Verfahren zum Herstellen einer differentialen Gehäusestruktur gemäß Patentanspruch 13 und ein Verfahren zur Herstellung eines automatisierten Fertigungssystems gemäß Patentanspruch 14 gelöst.

Es soll an dieser Stelle erwähnt werden, dass wenn von differentialen Gehäusekomponenten oder Gehäusestrukturen die Rede ist, auch immer teildifferentiale Gehäusekomponenten und Gehäusestrukturen umfasst sein sollen. Besonders bevorzugt handelt es sich bei einer solchen differentialen Gehäusekomponente um eine vorgeschweißte Seitenwand für ein Gehäuse eines Wagenkastens eines Schienenfahrzeugs.

Das automatisierte Fertigungssystem weist eine Auflage für das vorzugsweise horizontale Positionieren einer zu bearbeitenden differentialen Gehäusekomponente auf. Teil des erfindungsgemäßen automatisierten Fertigungssystems ist auch mindestens ein Bearbeitungs- oder Handhabungsroboter zur Bearbeitung oder zum Halten der zu bearbeitenden differentialen Gehäusekomponente, welche an der Peripherie der zu bearbeitenden differentialen Gehäusekomponente angeordnet ist. Wie später noch im Einzelnen erläutert, ist es besonders vorteilhaft, aber nicht notwendig, wenn das erfindungsgemäße Fertigungssystem mindestens einen Bearbeitungsroboter und einen Handhabungsroboter umfasst, wobei der Bearbeitungsroboter Fügearbeiten, insbesondere Schweißarbeiten, durchführt und der Handhabungsroboter einzelne, der differentialen Gehäusekomponente hinzuzufügende Komponenten, insbesondere Fensterrahmen oder Spanten, an der korrekten Position auf der differentialen Gehäusekomponente platziert.

Das erfindungsgemäße Fertigungssystem umfasst auch eine in Längsrichtung der zu bearbeitenden differentialen Gehäusekomponente angeordnete mobile Bewegungseinrichtung, welche dazu eingerichtet ist, entweder die zu bearbeitende differentiale Gehäusekomponente relativ zu dem mindestens einen Bearbeitungs- oder Handhabungsroboter in Längsrichtung zu bewegen oder den mindestens einen Bearbeitungs- oder Handhabungsroboter in Längsrichtung relativ zu der zu bearbeitenden differentialen Gehäusekomponente zu bewegen.

Vorteilhaft wird es ermöglicht, eine differentiale Gehäusekomponente, insbesondere eine (teil-)differentiale Aluminiumbaugruppe eines Wagenkastens, vollautomatisiert zu fügen, inklusive der damit verbundenen Handhabungs- und/oder Spannoperationen. Alle Bereiche der differentialen Gehäusekomponenten sind von den Robotern, vorzugsweise Knickarmrobotern erreichbar. Vorzugsweise sind beide Roboter, also der Handhabungsroboter und der Bearbeitungsroboter dazu eingerichtet, simultan zu arbeiten. Das Fertigungssystem, auch als Roboterzelle bezeichnet, ist flexibel ausgelegt und kann für verschiedene Varianten verwendet werden; somit können auch geringe Losgrößen gefertigt werden. Mit der vollautomatisierten Lösung kann der bei manueller Fertigung sich ergebende erhöhte Ressourcenaufwand, welcher sich bei der (Teil-)-differentialbauweise durch die vergleichsweise hohe Teileanzahl ergibt, (teil-) kompensiert werden. Die Investitionskosten sind dabei im Vergleich zu portalgestützten Lösungen gering. Mit portalgestützter Lösung" ist eine alternative Anlagenform in Portalbauweise gemeint, bei der Bearbeitungswerkzeuge an einem jochartigen Träger über dem zu bearbeitenden Werkstück angeordnet sind.

Bei dem erfindungsgemäßen Verfahren zur Herstellung einer differentialen Gehäusestruktur erfolgt ein vorzugsweise horizontales Positionieren einer zu bearbeitenden differentialen Gehäusekomponente auf einer Auflage. Anschließend wird eine Bewegung durch eine mobile Bewegungseinrichtung ausgeführt, wobei entweder die zu bearbeitende differentiale Gehäusekomponente relativ zu mindestens einem Bearbeitungsroboter oder mindestens einem Handhabungsroboter in Längsrichtung bewegt wird oder der mindestens eine Bearbeitungsroboter oder Handhabungsroboter in Längsrichtung relativ zu der zu bearbeitenden differentialen Gehäusekomponente bewegt wird. Diese Bewegung dient der Positionierung des mindestens einen Bearbeitungsroboters oder des mindestens einen Handhabungsroboters für einen Handhabungsvorgang oder Bearbeitungsvorgang. Schließlich wird ein Arbeitsschritt durch den mindestens einen Bearbeitungsroboter oder Handhabungsroboter zur Bearbeitung oder zum Halten der zu bearbeitenden differentialen Gehäusekomponente an der Peripherie der zu bearbeitenden differentialen Gehäusekomponente ausgeführt. Vorteilhaft lassen sich die Arbeitsschritte zur Fertigung einer differentialen Gehäusestruktur automatisiert ausführen, wobei der Einsatz von menschlichen Arbeitskräften eingespart wird.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Variante des erfindungsgemäßen automatisierten Fertigungssystems weist das automatisierte Fertigungssystem mindestens ein Spannwerkzeug bzw. mindestens eine Spanneinrichtung zum Festspannen eines der folgenden Elemente zu dessen Bearbeitung auf:
- eine Spante,
- einen Fensterrahmen,
- eine differentiale Gehäusekomponente, insbesondere eine Gehäusewand.

Die genannten Komponenten werden benötigt, um eine differentiale Gehäusestruktur aufzubauen. Vorteilhaft kann das Fügen der einzelnen Komponenten mit dem erfindungsgemäßen automatisierten Fertigungssystem erleichtert werden.

Bevorzugt weist das erfindungsgemäße automatisierte Fertigungssystem mindestens einen Bearbeitungsroboter und einen Handhabungsroboter auf. Bei dieser Variante werden beide Typen von Arbeiten, die bei der Herstellung einer differentialen Gehäusestruktur anfallen, automatisiert durchgeführt, so dass der Personalaufwand bzw. der Aufwand der manuellen Tätigkeiten im Vergleich zu einer semi-automatisierten Variante, bei der nur die Bearbeitung oder nur die Handhabung automatisiert ist, weiter verringert ist.

Ebenfalls bevorzugt weist das automatisierte Fertigungssystem mindestens einen Bearbeitungsroboter oder Handhabungsroboter auf, der beweglich in Längsrichtung relativ zu der Auflage angeordnet ist.

Bevorzugt ist die Auflage relativ zu dem mindestens einen Bearbeitungsroboter oder Handhabungsroboter beweglich in Längsrichtung ausgebildet, derart, dass die zu bearbeitende differentiale Gehäusekomponente an dem mindestens einen Bearbeitungs- oder Handhabungsroboter vorbeibewegbar ist. Vorteilhaft kann der jeweilige Roboter stationär ausgebildet sein, wobei die Bewegung der Auflage mit dem Arbeitstakt des jeweiligen Roboters synchronisiert ist, so dass der jeweilige Roboter immer an der korrekten Position auf der differentialen Gehäusekomponente arbeitet.

Das erfindungsgemäße automatisierte Fertigungssystem weist vorzugsweise mindestens eine Bereitstellungseinrichtung, vorzugsweise einen Materialwagen oder eine Schublade, zur Bereitstellung der zu verarbeitenden Komponenten, insbesondere Spanten und/oder Fensterrahmen, auf. Die genannten Bereitstellungseinrichtungen sind vorzugsweise so positioniert, dass sie im Produktionsprozess der differentialen Gehäusestruktur leicht zu handhaben und zu erreichen sind. Umfasst das erfindungsgemäße automatisierte Fertigungssystem einen Handhabungsroboter, so ist es bevorzugt, dass sich die mindestens eine Bereitstellungseinrichtung in der Reichweite der Handhabungsroboter befindet, damit der Handhabungsroboter auf die zu verarbeitenden Komponenten aktiv zugreifen kann. Insbesondere sollte die mindestens eine Bereitstellungseinrichtung in Querrichtung zu der Auflage ausreichend nah an der Auflage positioniert sein, so dass der Handhabungsroboter sich nicht in Querrichtung bewegen muss. Dies ist vorteilhaft, wenn das erfindungsgemäße automatisierte Fertigungssystem in Längsrichtung linear bewegbare Roboter aufweist, die aber in Querrichtung nicht bewegbar ist. Dies ist der Fall, wenn die Roboter auf einer Linearachse längs zur Auflage bewegbar sind, nicht jedoch quer zu der Auflage bewegbar sind.

Bevorzugt weist das erfindungsgemäße automatisierte Fertigungssystem einen oder mehrere Werkzeugbahnhöfe zur Bereitstellung von Werkzeugen für den Bearbeitungsroboter auf. Vorteilhaft kann der Bearbeitungsroboter selbständig auf unterschiedliche Werkzeuge für unterschiedliche Bearbeitungsschritte zugreifen. Solche unterschiedlichen Bearbeitungsschritte umfassen unterschiedliche Typen von Schweißverfahren mit unterschiedlichen Schweißköpfen, die dem Bearbeitungsroboter von den Werkzeugbahnhöfen bereitgestellt werden. Dabei sind die Werkzeugbahnhöfe vorzugsweise so positioniert, dass der Bearbeitungsroboter sich nicht quer zu der Auflage bewegen muss, sondern sich nur längs auf einer Linearachse relativ zur Auflage bewegen muss.

Daneben umfasst das automatisierte Fertigungssystem optional einen oder mehrere Werkzeugbahnhöfe zur Bereitstellung von Greifern für den Handhabungsroboter. Unterschiedliche Arten von Greifern sind für unterschiedliche Komponenten, insbesondere Spanten und Fensterrahmen, ausgebildet.

Ebenfalls optional weist das erfindungsgemäße automatisierte Fertigungssystem einen oder mehrere Bereitstellungseinheiten für Werkzeugreinigungsgeräte auf. Werkzeugreinigungsgeräte sind Teil einer Reinigungsstation.

Die Reinigungsstation ist stationär angeordnet und kann vom Roboter angefahren werden. Diese wird insbesondere für das Reibrührpunktschweißverfahren benötigt. Grund dafür ist, dass sich Aluminium zwischen den Werkzeugteilen festsetzen kann, die in festzulegenden Zeitabständen an der Reinigungsstation abgestreift werden können. Hierbei handelt es sich um einfache mechanische Abstreifer, an denen der Roboter mit dem verunreinigten Werkzeug vorbeifährt.

Bevorzugt ist der Bearbeitungsroboter des erfindungsgemäßen Fertigungssystems dazu ausgebildet, einen Schweißprozess durchzuführen. Ein Schweißprozess eignet sich besonders für die Verbindung von Komponenten aus Metall, wie sie als Spanten oder Fensterrahmen oder Stringer in differentialen Gehäusestrukturen verwendet werden, mit einem Metallgehäuse.

In einer Ausgestaltung des erfindungsgemäßen automatisierten Fertigungssystems umfasst der Bearbeitungsroboter ein Werkzeugwechselsystem. Ein solches Werkzeugwechselsystem umfasst eine flexible Werkzeugschnittstelle an dem Roboter, welche einen automatisierten Werkzeugwechsel ermöglicht.

Neben Schweißprozessen führt der Bearbeitungsroboter optional auch andere Arbeitsschritte, insbesondere Kleben, Schleifen, Hämmern, Nieten, Fräsen oder ähnliches, aus.

Vorzugsweise wird die Verbindung zwischen dem Fensterrahmen und der Innenseite der differentialen Gehäusekomponente als stoffschlüssige Verbindung ausgebildet. Eine solche stoffschlüssige Verbindung erlaubt eine zuverlässige Fixierung des Fensterrahmens an einer Seitenwand. Bevorzugt umfasst der Bearbeitungsroboter ein Werkzeug zum Ausbilden einer solchen stoffschlüssigen Verbindung.

Bevorzugt umfasst die stoffschlüssige Verbindung einen der folgenden Verbindungstypen:
- eine Klebeverbindung,
- eine Reibrührschweißverbindung oder FSW-Schweißverbindung,
- eine Punktschweißverbindung.

Eine Reibrührschweißverbindung eignet sich besonders zur Vermeidung von Schweißverzügen auf der Außenhaut. Fensterrahmen werden mit einer umlaufenden Reibrührschweißnaht verbunden und nicht mit Punktschweißverbindungen auf die Außenhaut gepunktet oder alternativ verklebt. Spanten werden dagegen mit einem Punktschweißverfahren auf der Außenhaut aufgeschweißt.

Umfasst die stoffschlüssige Verbindung eine Klebeverbindung, so ist die Klebeverbindung bevorzugt durch Dickschichtkleben hergestellt. Dickschichtkleben erlaubt eine erhöhte Elastizität der Klebeverbindung.

Eine FSW-Schweißverbindung ("FSW" steht für "friction stir welding", im Deutschen etwa "Reibrührschweißen") eignet sich besonders für Mischverbindungen, beispielsweise Stahl-Aluminium-Verbindungen. Dabei werden die zu verbindenden Metalle an den Fügestellen nicht geschmolzen, sondern durch ein rotierendes Werkzeug unter hohem Druck ineinander gerührt. Bevorzugt umfasst der Bearbeitungsroboter ein Werkzeug zum Ausbilden einer solchen FSW-Schweißverbindung.

Weitere Typen von Werkzeugköpfen umfassen vorzugsweise einen Schweißkopf für das Befestigen von Fensterrahmen mit einem SSFSW Verfahren (im Englischen "Stationary Shoulder Friction Stir Welding", im Deutschen "Stationäres Schulter-Reibrührschweißen"). Dagegen werden für die Befestigung der Versteifungselemente vorzugsweise RFSSW-Verfahren (im Englischen "Refill Friction Stir Spot Weld", im Deutschen etwa "Rührreibpunktschweißverfahren mit Nachfüllen") eingesetzt. Bevorzugt umfassen die Werkzeugköpfe des Bearbeitungsroboters auch einen Werkzeugkopf für das zuletzt genannte Verfahren. Vorteilhaft werden für die Fixierung von unterschiedlichen Komponenten unterschiedliche, besonders geeignete Schweißköpfe eingesetzt.

Optional ist der Bearbeitungsroboter für MIG-Schweißoperationen ("MIG" steht für "Metal Intert Gas", im Deutschen etwas "Metall-Schutzgasschweißen") ausgebildet. In dieser Variante ist eine leichtere Ausführung des Bearbeitungsroboters möglich als es bei den Punktschweißverfahren nötig ist, bei denen sehr viel Kraft auf die zu verbindenden Komponenten ausgeübt werden muss.

In einer Ausgestaltung des erfindungsgemäßen automatisierten Fertigungssystems ist der Handhabungsroboter dazu ausgebildet, einen Sensor zum Prüfen der Qualität einer Schweißverbindung aufzuweisen. Vorteilhaft wird auch die Qualitätskontrolle der Bearbeitung der differentialen Gehäusekomponente automatisiert, wodurch weitere Personalressourcen eingespart werden.

Es wird auch ein Verfahren zum Herstellen des erfindungsgemäßen automatisierten Fertigungssystems angegeben.

Zur Vorbereitung des Herstellungsprozesses wird zunächst eine Auflage für das horizontale Positionieren einer zu bearbeitenden differentialen Gehäusekomponente ausgebildet.

Weiterhin erfolgt ein Anordnen mindestens eines Bearbeitungs- oder Handhabungsroboters zur Bearbeitung oder zum Halten der zu bearbeitenden differentialen Gehäusekomponente an der Peripherie der zu bearbeitenden differentialen Gehäusekomponente.

Außerdem wird in Längsrichtung der zu bearbeitenden differentialen Gehäusekomponente angeordnet eine mobile Bewegungseinrichtung dazu eingerichtet, entweder die zu bearbeitende differentiale Gehäusekomponente relativ zu dem mindestens einen Bearbeitungsroboter oder Handhabungsroboter in Längsrichtung zu bewegen oder den mindestens einen Bearbeitungsroboter oder Handhabungsroboter in Längsrichtung relativ zu der zu bearbeitenden differentialen Gehäusekomponente zu bewegen. Wie bereits erläutert, kann die im Vergleich zu der üblichen integralen Bauweise erhöhte Anzahl an Bearbeitungsschritten bei der Herstellung von differentialen oder teildifferentialen Gehäusestrukturen durch den Einsatz eines automatisierten Fertigungssystems bei der Herstellung und Bearbeitung kompensiert werden.

Die Erfindung wird im Folgenden unter Hinweis auf die beigefügten Figuren anhand von Ausführungsbeispielen noch einmal näher erläutert. Es zeigen:
- FIG 1: eine Draufsicht auf ein automatisiertes Fertigungssystem gemäß einem Ausführungsbeispiel der Erfindung,
- FIG 2: eine perspektivische Darstellung eines automatisierten Fertigungssystems gemäß einem Ausführungsbeispiel der Erfindung,
- FIG 3: eine perspektivische Darstellung einer Auflage mit Spannvorrichtungen eines automatisierten Fertigungssystems gemäß einem Ausführungsbeispiel der Erfindung,
- FIG 4: ein Flussdiagramm, welches ein Verfahren zur Herstellung eines automatisierten Fertigungssystems gemäß einem Ausführungsbeispiel der Erfindung veranschaulicht,
- FIG 5: ein Flussdiagramm, welches ein Verfahren zur Herstellung einer Gehäusestruktur gemäß einem Ausführungsbeispiel der Erfindung veranschaulicht.

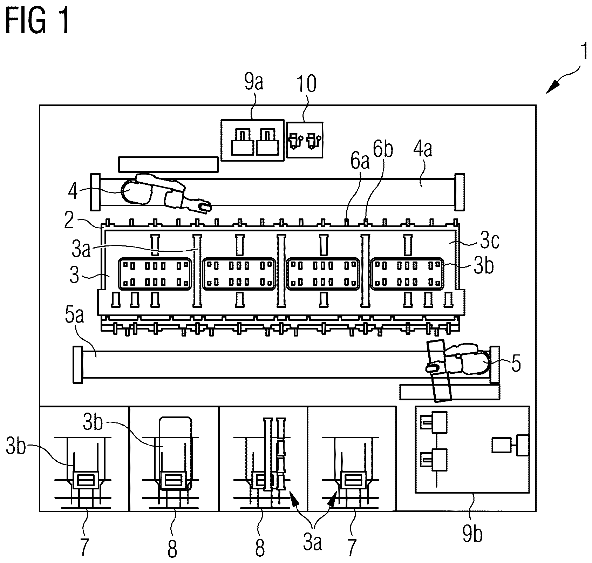

In FIG 1 ist eine Draufsicht auf ein automatisiertes Fertigungssystem 1 gemäß einem Ausführungsbeispiel der Erfindung dargestellt, mit dem auf Basis einer differentialen Gehäusekomponente 3 eine differentiale Gehäusestruktur 3c mit Stützstrukturen und Fenster ausgebildet werden soll.

Die zu fügende differentiale Gehäusekomponente 3 ist liegend auf einer Auflage 2 positioniert. An beiden Längsseiten der Auflage 2 ist eine Linearachse 4a, 5a angeordnet, auf denen als Knickarmroboter ausgeführte Bearbeitungsroboter 4 (siehe im Bild oben) und Handhabungsroboter 5 (siehe im Bild unten) entlang der gesamten Bauteillänge der differentialen Gehäusekomponente 3 verfahren können.

Die Linearachsen 4a, 5a sind in einem so gewählten Abstand zu der differentialen Gehäusekomponente 3 positioniert, dass die beiden Roboter 4, 5 innerhalb ihres Arbeitsraums alle Stellen auf der differentialen Gehäusekomponente 3 erreichen können.

Wie bereits erwähnt, umfasst das automatisierte Fertigungssystem 1 zwei unterschiedliche Typen von Robotern: einen Handhabungsroboter 5, der die Bauteile von Bereitstellungsstationen 7 (im Bild unten, ein Port 7 für einen Wagen, auch eine Schublade ist alternativ möglich) aufnehmen und auf der liegenden differentialen Gehäusekomponente 3 positionieren kann. Mittels eines Werkzeugwechselsystems kann der Handhabungsroboter 5 verschiedene Greifer von den Greiferbahnhöfen 9b (im Bild unten rechts) aufnehmen bzw. diese dort wechseln, je nachdem, welche Bauteilgeometrie gehandelt werden muss.

Der dem Handhabungsroboter 5 gegenüberliegende Bearbeitungsroboter 4 ist steifer ausgeführt und verfügt ebenfalls über ein Werkzeugwechselsystem. Dieser Bearbeitungsroboter 4 ist für die Fügeoperationen zuständig. Im dargestellten Fall handelt es sich um Reibrührschweiß-Fügeoperationen (Reibrührschweißen wird auch als FSW-Schweißen bezeichnet, wobei "FSW" für die englische Bezeichnung "Friction Stir Welding" steht).

Aufgrund der auftretenden Prozesskräfte beim FSW-Schweißen ist der Bearbeitungsroboter 4 steifer und stärker ausgeführt als der Handhabungsroboter 5. Alternativ kann der Bearbeitungsroboter 4 auch MIG-Schweißoperationen ("MIG" steht für "Metal Inert Gas", im Deutschen etwas "Metall-Schutzgasschweißen") ausführen (in dieser Variante ist eine leichtere Ausführung des Bearbeitungsroboters 4 möglich).

Das Werkzeugwechselsystem dient dazu, verschiedene FSW-Schweißköpfe aufzunehmen: Die Fensterrahmen 3b werden im Beispiel mit dem Standard-FSW-Verfahren umlaufend verschweißt (alternativ kann auch ein SSFSW Verfahren (im Englischen "Stationary Shoulder Friction Stir Welding", im Deutschen "Stationäres Schulter-Reibrührschweißen"), während die Versteifungselemente (Spanten 3a) mit dem RFSSW-Verfahren (im Englischen "Refill Friction Stir Spot Weld", im Deutschen etwa "Rührreibpunktschweißverfahren mit Nachfüllen") aufgepunktet werden. Andere Schweißverfahren sind ebenso denkbar. Der Vorteil der Roboteranordnung auf den Linearachsen 4a, 5a ist, dass alle Orte auf der differentialen Gehäusekomponente 3 erreicht werden können und die notwendigen Prozesskräfte aufgebracht werden können.

Auch ein automatisiertes Kleben der Spanten 3a und Fensterrahmen 3b (oder sonstige zu fügende Teile, wie zum Beispiel die Fensterscheiben 3d) ist mit dieser Anordnung möglich. Dabei würde weiterhin der Handhabungsroboter 5 die Teile aufnehmen, positionieren und temporär fixieren, während der gegenüberliegende Bearbeitungsroboter 4 in dem Fall mit einer Dosiereinheit den Klebstoff vor dem Auflegen der Bauteile 3a, 3b auf die Fügeflächen der liegenden differentialen Gehäusekomponente 3 applizieren würde. Auch ein vorheriges Vorbehandeln der Fügeflächen mit einem Laser oder einem Primer kann mit dem Fügeroboter bzw. Bearbeitungsroboter 4 erfolgen, indem die für die jeweiligen Schritte notwendigen Werkzeuge über den Werkzeugbahnhof 9b aufgenommen werden.

Die industriellen Knickarmroboter 4, 5 bieten im Vergleich zu den portalgestützten Lösungen deutlich geringere Investitionskosten bei gleichzeitig höherer Flexibilität und helfen damit bei geringen Losgrößen viele Varianten abbilden zu können.

In FIG 1 ist auch im Bild oben in der Mitte eine Bereitstellungseinheit 10 für Reinigungsgeräte gezeigt. Die Reinigungsgeräte werden dazu genutzt, Werkzeuge zu reinigen, die von dem Bearbeitungsroboter 4 verwendet wurden. In FIG 1 sind auch Spanneinrichtung 6a, 6b gezeigt, mit denen die differentiale Gehäusekomponente 3 und Spanten 3a in Position gehalten werden, um bearbeitet zu werden.

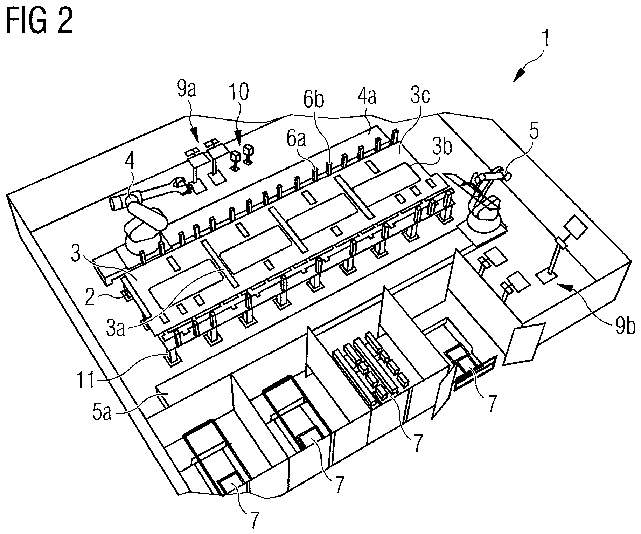

In FIG 2 ist eine perspektivische Darstellung eines automatisierten Fertigungssystems 1 gemäß einem Ausführungsbeispiel der Erfindung gezeigt.

Das Fertigungssystem 1 ist derart ausgestaltet, dass es die liegende differentiale Gehäusekomponente 3 samt der auftretenden Prozesskräfte aufnehmen kann. Bombierte, also gewölbte, oder abknickende Gehäusekomponenten 3, wie im Beispiel, können mit wechselbaren oder einstellbaren Stützen 11 unterfüttert werden.

Die in FIG 1 bereits erläuterten übrigen Elemente des automatisierten Fertigungssystems 1 werden der Kürze halber im Zusammenhang mit FIG 2 nicht erneut besprochen.

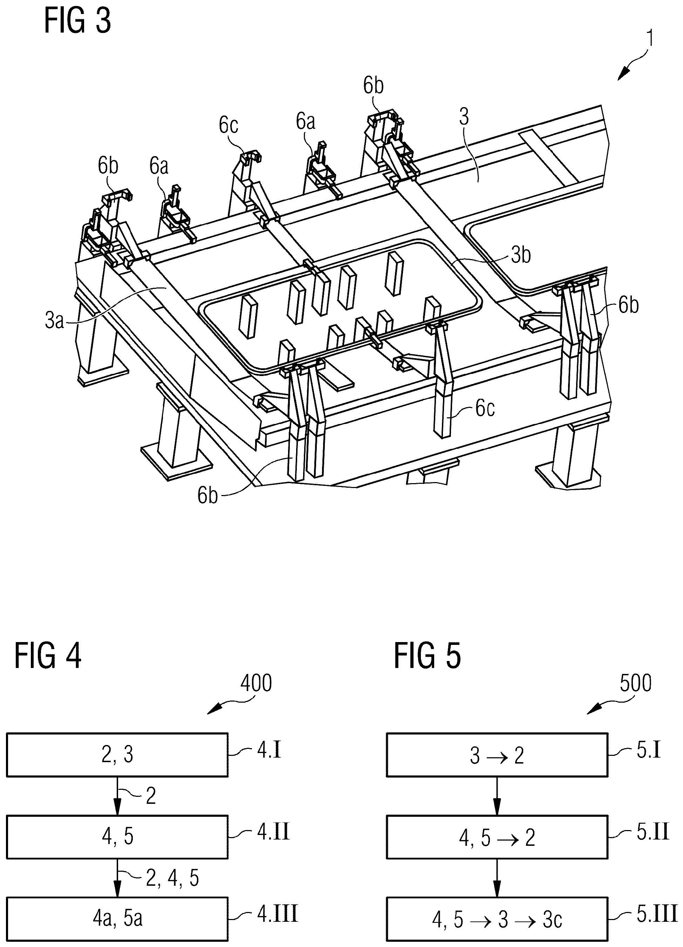

In FIG 3 ist eine perspektivische Darstellung einer Auflage 1 mit Spanneinrichtungen 6a, 6b, 6c eines automatisierten Fertigungssystems 1 gemäß einem Ausführungsbeispiel der Erfindung gezeigt. Die Auflage 2 wird mit Stützen 11 abgestützt.

Durch die Verwendung von Stützen 11 und Spanneinrichtungen 6a, 6b, 6c ist die Auflage 2 flexibel und kann an verschiedene Baugruppen adaptiert werden.

Sobald der Handhabungsroboter 5 die Bauteile 3a, 3b auf der liegenden differentialen Gehäusekomponente 3 abgelegt hat, fahren die automatischen Spanneinrichtungen 6a, 6b, 6c, welche auf der Auflage 2 positioniert sind, an die Bauteile 3a, 3b heran und fixieren die anzuschweißenden Bauteile 3a, 3b, wie Spanten 3a und Fensterrahmen 3a. Der Handhabungsroboter 5 hält die Bauteile 3a, 3b noch so lange in Position, bis die Spanneinrichtungen 6a, 6b, 6c zugefahren sind. Die Spanneinrichtungen 6a, 6b, 6c dienen dazu, die Bauteile 3a, 3b zu fixieren und auch unter den Prozesskräften vor dem Verrutschen zu sichern. Dabei gibt es Spanneinrichtungen 6a, mit denen die differentiale Gehäusekomponente 3 gehalten und gespannt wird. Weiterhin gibt es Spanneinrichtungen 6b für das Spannen von langen Spanten und Spanneinrichtungen 6c für das Spannen von kurzen Spanten.

Nach dem Fügen durch Schweißen kann der Handhabungsroboter 5 einen Sensor aufnehmen, der die Schweißverbindungen oberflächlich abtastet und somit automatisiert eine visuelle Prüfung der Verbindungen vornimmt.

Alternativ zu den Linearachsen 4a, 5a können die Roboter 4, 5 (siehe FIG 1, 2) auch stationär betrieben werden. In diesem Fall muss die differentiale Gehäusekomponente 3 schrittweise, idealerweise automatisiert, weitergeschoben werden, nachdem die Roboter 4, 5 sämtliche Operationen ausgeführt haben, die in ihrem Arbeitsraum (Aktionsradius) liegen. Dadurch können die kostenintensiven Linearachsen 4a, 5a eingespart werden. Zudem kann die Anzahl der Spanneinrichtungen 6a, 6b, 6c reduziert werden, da diese dann nicht entlang der gesamten differentialen Gehäusekomponente 3 erforderlich sind, sondern im Wesentlichen immer nur auf Höhe der stationär angeordneten Roboter.

In FIG 4 ist ein Flussdiagramm 400, welches ein Verfahren zur Herstellung eines automatisierten Fertigungssystems 1 veranschaulicht, gezeigt.

Bei dem Schritt 4.I wird eine Auflage 2 für das horizontale Positionieren einer zu bearbeitenden differentialen Gehäusekomponente 3 ausgebildet.

Bei dem Schritt 4.II werden ein Bearbeitungsroboter 4 und ein Handhabungsroboter 5 zur Bearbeitung bzw. zum Halten der zu bearbeitenden differentialen Gehäusekomponente 3 an der Peripherie der zu bearbeitenden differentialen Gehäusekomponente 3 bereitgestellt.

Bei dem Schritt 4.III werden jeweils in Längsrichtung der zu bearbeitenden differentialen Gehäusekomponente 3 angeordnete Linearachsen 4a, 5a für die Bewegung der beiden Roboter 4, 5 eingerichtet, derart, dass die beiden Roboter 4, 5 längs zu der Auflage 2 hin- und herbewegt werden können.

In FIG 5 ist ein Flussdiagramm gezeigt, welches ein Verfahren zur Herstellung einer differentialen Gehäusestruktur 3c veranschaulicht.

Bei dem Schritt 5.1 erfolgt ein horizontales Positionieren einer zu bearbeitenden differentialen Gehäusekomponente 3 auf einer Auflage 2 eines Fertigungssystems 1, wie es in FIG 1 bis FIG 3 veranschaulicht ist.

Bei dem Schritt 5.II werden der Bearbeitungsroboter 4 und der Handhabungsroboter 5 in Längsrichtung relativ zu der Auflage 2 des Fertigungssystems 1 bewegt, zur Positionierung des Bearbeitungsroboters 4 und des Handhabungsroboters 5 für einen Handhabungsvorgang und einen Bearbeitungsvorgang.

Bei dem Schritt 5.III wird ein Arbeitsschritt durch den Bearbeitungsroboter 4 zur Bearbeitung einer auf der Auflage 2 liegenden differentialen Gehäusekomponente 3 und ein Handhabungsschritt durch einen Handhabungsroboter 5 zum Halten der zu bearbeitenden differentialen Gehäusekomponente 3 an der Peripherie der zu bearbeitenden differentialen Gehäusekomponente 3 durchgeführt, wobei die differentiale Gehäusestruktur 3c hergestellt wird.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Unabhängig vom grammatikalischen Geschlecht eines bestimmten Begriffes sind Personen mit männlicher, weiblicher oder anderer Geschlechteridentität mit umfasst.

## Patentansprüche

1. Automatisiertes Fertigungssystem (1), aufweisend:
- eine Auflage (2) für das horizontale Positionieren einer zu bearbeitenden differentialen Gehäusekomponente (3),
- mindestens einen Bearbeitungsroboter (4) oder Handhabungsroboter (5) zur Bearbeitung oder zum Halten der zu bearbeitenden differentialen Gehäusekomponente (3), welche an der Peripherie der zu bearbeitenden differentialen Gehäusekomponente (3) angeordnet ist,
- eine mobile Bewegungseinrichtung (4a, 5a), welche dazu eingerichtet ist, entweder die zu bearbeitende differentiale Gehäusekomponente (3) relativ zu dem mindestens einen Bearbeitungsroboter (4) oder Handhabungsroboter (5) in Längsrichtung zu bewegen oder den mindestens einen Bearbeitungsroboter (4) oder Handhabungsroboter (5) in Längsrichtung relativ zu der zu bearbeitenden differentialen Gehäusekomponente (3) zu bewegen.

2. Automatisiertes Fertigungssystem nach Anspruch 1,
aufweisend mindestens eine Spanneinrichtung (6a, 6b, 6c) zum Festspannen eines der folgenden Elemente zu dessen Bearbeitung:
- eine Spante (3a),
- ein Fensterrahmen (3b),
- eine differentiale Gehäusekomponente (3).

3. Automatisiertes Fertigungssystem nach Anspruch 1 oder 2,
aufweisend mindestens einen Bearbeitungsroboter (4) und einen Handhabungsroboter (5).

4. Automatisiertes Fertigungssystem nach einem der vorstehenden Ansprüche,
wobei der mindestens eine Bearbeitungs- oder Handhabungsroboter (4, 5) beweglich in Längsrichtung relativ zu der Auflage (2) angeordnet ist.

5. Automatisiertes Fertigungssystem nach einem der vorstehenden Ansprüche,
wobei die Auflage (2) relativ zu dem mindestens einen Bearbeitungs- oder Handhabungsroboter (4, 5) beweglich in Längsrichtung ausgebildet ist, derart, dass die die zu bearbeitende differentiale Gehäusekomponente (3) an dem mindestens einen Bearbeitungsroboter (4) oder Handhabungsroboter (5) vorbeibewegbar ist.

6. Automatisiertes Fertigungssystem nach einem der vorstehenden Ansprüche, aufweisend mindestens eine Bereitstellungseinrichtung, vorzugsweise einen Materialwagen oder eine Schublade, zur Bereitstellung der Spanten (3a) und/oder Fensterrahmen (3b).

7. Automatisiertes Fertigungssystem nach einem der vorstehenden Ansprüche, aufweisend einen oder mehrere Werkzeugbahnhöfe (9a) zur Bereitstellung von Werkzeugen für den Bearbeitungsroboter (4).

8. Automatisiertes Fertigungssystem nach einem der vorstehenden Ansprüche, aufweisend einen oder mehrere Werkzeugbahnhöfe (9b) zur Bereitstellung von Greifern für den Handhabungsroboter (5).

9. Automatisiertes Fertigungssystem nach einem der vorstehenden Ansprüche, aufweisend einen oder mehrere Bereitstellungseinheiten (10) für Werkzeugreinigungsgeräte.

10. Automatisiertes Fertigungssystem nach einem der vorstehenden Ansprüche,
wobei der Bearbeitungsroboter (4) dazu ausgebildet ist, einen Schweißprozess durchzuführen.

11. Automatisiertes Fertigungssystem nach einem der vorstehenden Ansprüche,
wobei der Bearbeitungsroboter (4) ein Werkzeugwechselsystem umfasst.

12. Automatisiertes Fertigungssystem nach einem der vorstehenden Ansprüche,
wobei der Handhabungsroboter (5) einen Sensor zum Prüfen der Qualität einer Schweißverbindung aufweist.

13. Verfahren zur Herstellung einer differentialen Gehäusestruktur (3c), aufweisend die Schritte:
- horizontales Positionieren einer zu bearbeitenden differentialen Gehäusekomponente (3) auf einer Auflage (2),
- Durchführen einer Bewegung entweder einer zu bearbeitenden differentialen Gehäusekomponente (3), wobei die zu bearbeitende differentiale Gehäusekomponente (3) relativ zu mindestens einem Bearbeitungsroboter (4) oder mindestens einem Handhabungsroboter (5) in Längsrichtung bewegt wird, zur Positionierung der zu bearbeitenden differentiale Gehäusekomponente (3) für einen Handhabungsvorgang oder Bearbeitungsvorgang, oder des mindestens eine Bearbeitungsroboter (4) oder Handhabungsroboter (5) in Längsrichtung relativ zu der zu bearbeitenden differentialen Gehäusekomponente (3), zur Positionierung des mindestens einen Bearbeitungsroboters (4) oder mindestens einem Handhabungsroboters (5) für einen Handhabungsvorgang oder Bearbeitungsvorgang,
- Ausführen eines Arbeitsschritts durch den mindestens einen Bearbeitungsroboter (4) oder Handhabungsroboter (5) zur Bearbeitung oder zum Halten der zu bearbeitenden differentialen Gehäusekomponente (3) an der Peripherie der zu bearbeitenden differentialen Gehäusekomponente (3).

14. Verfahren zur Herstellung eines automatisierten Fertigungssystems (1) nach einem der Ansprüche 1 bis 12, aufweisend die Schritte:
- Ausbilden einer Auflage (2) für das horizontale Positionieren einer zu bearbeitenden differentialen Gehäusekomponente (3),
- Anordnen mindestens eines Bearbeitungsroboters (4) und/oder Handhabungsroboters (5) zur Bearbeitung oder zum Halten der zu bearbeitenden differentialen Gehäusekomponente (3) an der Peripherie der zu bearbeitenden differentialen Gehäusekomponente (3),
- Einrichten einer mobilen Bewegungseinrichtung (4a, 5a) dazu, entweder die zu bearbeitende differentiale Gehäusekomponente (3) relativ zu dem mindestens einen Bearbeitungsroboter (4) oder Handhabungsroboter (5) in Längsrichtung zu bewegen oder den mindestens einen Bearbeitungsroboter (4) oder Handhabungsroboter (5) in Längsrichtung relativ zu der zu bearbeitenden differentialen Gehäusekomponente (3) zu bewegen.
